# DEMANDE DE BREVET EUROPEEN

(11) **EP 4 556 290 A1**
(43) Date de publication de la demande: **21.05.2025**
(21) Numéro de dépôt: 24212489.9
(22) Date de dépôt: 12.11.2024
(51) Int. Cl.: B60L 3/00, B60L 53/14, B60L 53/57, B60L 53/66

(54) **SYSTÈME DE CHARGE D'UN VÉHICULE DONNEUR PAR UN VÉHICULE RECEVEUR**

(30) Priorité: 15.11.2023 FR 2312514
(71) Demandeur: Ampere SAS, 92100 Boulogne-Billancourt (FR)
(72) Inventeur: PIVOT, Guy-William, 78084 GUYANCOURT CEDEX (FR); REDON, Nathan, 78084 GUYANCOURT CEDEX (FR); STEPHAN, Arnaud, 78084 GUYANCOURT CEDEX (FR)
(74) Mandataire: Renault Group

(57) **Abrégé**

Système de charge d'un véhicule donneur par un véhicule receveur, comprenant un dispositif de charge (1) connecté au véhicule donneur et au véhicule receveur par des câbles de charge, le dispositif de charge (1) comprenant des connecteurs (2,3) pour câble de charge de véhicule automobile, un convertisseur de puissance (4) connecté en amont au premier connecteur (2) et en aval au deuxième connecteur (3), une unité de commande électronique (6) connectée au convertisseur de puissance (4), à une unité de commande électronique (7) du premier connecteur et à une unité de commande électronique (8) du deuxième connecteur, le dispositif de charge (1) comprenant une alimentation de précharge (10) connectée au premier connecteur (2) par un interrupteur de précharge (IntPC), l'unité de commande électronique (6), l'alimentation de précharge (10) et l'interrupteur de précharge (IntPC) étant configurés de sorte à satisfaire aux contrôles et vérifications préalable à la charge d'un véhicule électrique, le convertisseur de puissance (4) étant commandé pour charger le véhicule receveur à partir du véhicule donneur.

## Description

### Domaine technique

L'invention a pour domaine technique la charge de véhicules électriques ou hybrides, en particulier la charge de véhicule à véhicule.

### Techniques antérieures

La démocratisation du véhicule électrique se heurte actuellement au problème dit de l'angoisse d'autonomie. Du fait de l'accessibilité difficile des bornes de recharge pour véhicule électrique, notamment en zone périurbaine, le conducteur de véhicule électrique est angoissé à l'idée de ne plus avoir assez d'énergie pour atteindre une telle borne de recharge, ou que la borne de recharge atteinte soit indisponible alors que le niveau de charge ne permet pas d'atteindre une autre borne.

Cette angoisse est exacerbée par l'absence de batterie portative capable de recharger un véhicule électrique alors que, en ce qui concerne les véhicules thermiques, l'appoint en carburant peut être effectué au moyen d'un bidon d'essence peut permettre de remettre du carburant dans le réservoir.

Pour répondre à cette angoisse, la recharge de véhicule à véhicule V2V (acronyme anglophone pour « Vehicle to Vehicle ») a été développée. Elle consiste à transférer de l'énergie d'un véhicule donneur à un véhicule receveur afin de permettre à ce dernier de finir son trajet ou d'atteindre une borne de recharge.

De l'état de la technique antérieure, on connait le document WO2022160544 décrivant une telle solution de recharge de véhicule à véhicule V2V. Cette solution est embarquée et nécessite un ensemble de composants spécifiquement dédiés à la recharge de véhicule à véhicule V2V, tant dans le véhicule donneur que dans le véhicule receveur. Cette solution implique donc un surcout important pour chaque véhicule, ce qui est particulièrement problématique pour les véhicules électriques dont le coût est déjà important.

Par ailleurs, la recharge doit être suffisamment rapide pour permettre de déplacer le véhicule receveur dans un endroit sûr et dégager la chaussée.

Il existe donc un besoin pour un système de recharge de véhicule à véhicule ne nécessitant pas de modification ou de composants dédiés dans le véhicule donneur ou le véhicule receveur.

### Exposé de l'invention

L'invention a pour objet un système de charge d'un véhicule receveur par un véhicule donneur, comprenant un dispositif de charge connecté au véhicule donneur par un premier câble de charge et un premier connecteur pour câble de charge et au véhicule receveur par un deuxième câble de charge et un deuxième connecteur de charge pour câble de charge. Le dispositif de charge comprend le premier connecteur pour câble de charge de véhicule automobile et le deuxième connecteur pour câble de charge de véhicule automobile, un convertisseur de puissance connecté en entrée au premier connecteur et en sortie au deuxième connecteur , une unité de commande électronique connectée au convertisseur de puissance ainsi qu'à une unité de commande électronique du premier connecteur et à une unité de commande électronique du deuxième connecteur, le dispositif de charge comprenant une alimentation de précharge connectée par un interrupteur de précharge au premier connecteur pour câble de charge , l'interrupteur de précharge étant connecté à l'unité de commande électronique , l'unité de commande électronique, l'alimentation de précharge et l'interrupteur de précharge étant configuré de sorte à satisfaire à des contrôles et vérifications préalable à la charge d'un véhicule électrique, le convertisseur de puissance étant commandé pour transférer de l'énergie du véhicule donneur vers le véhicule receveur.

L'alimentation de précharge peut délivrer notamment une tension ajustable, notamment entre 100 Volts et 500 Volts avec un courant maximal prédéfini, notamment de l'ordre de 30 mA.

Le dispositif de charge peut comprendre une première pluralité d'interrupteurs commandant le transfert de puissance entre le premier connecteur et le convertisseur de puissance, et une deuxième pluralité d'interrupteurs commandant le transfert de puissance entre le convertisseur de puissance et le deuxième connecteur.

L'unité de commande électronique du premier connecteur et/ou l'unité de commande électronique du deuxième connecteur peuvent être prévues afin d'établir et de superviser un transfert de puissance alternative AC avec le véhicule connecté au premier connecteur et/ou au deuxième connecteur de charge respectivement, un convertisseur DC-AC ou AC-AC étant prévu en parallèle du convertisseur de puissance avec des interrupteurs disposés de sorte à dérouter le courant de puissance à travers le convertisseur DC-AC ou AC-AC.

Le dispositif de charge peut comprendre un receveur et un émetteur configurés de sorte à établir une connexion avec un serveur distant ou un dispositif local pour permettre une remontée des statistiques d'utilisation du système de charge.

Le dispositif de charge peut comprendre une unité de commande électronique de sécurité surveillant au moins une partie des courants et tensions du système de charge, ainsi que le bon fonctionnement de l' unité de commande électronique, l' unité de commande électronique de sécurité étant configurée pour interrompre le fonctionnement du dispositif de charge par l'intermédiaire d'un ensemble d'interrupteurs ainsi que de connexions à l'unité de commande électronique du premier connecteur, à l'unité de commande électronique du deuxième connecteur et au convertisseur de puissance.

L'un au moins parmi le véhicule donneur et le véhicule receveur peut être un véhicule hybride.

L'alimentation de précharge peut être connectée par l'intermédiaire de l'interrupteur de précharge au deuxième connecteur pour câble de charge, un relais commandé étant alors connecté en entrée à l'interrupteur de précharge et en sortie au premier connecteur pour câble de charge et au deuxième connecteur pour câble de charge de sorte à diriger le transfert d'énergie vers l'un ou l'autre des connecteurs pour câble de charge afin de réaliser un test d'isolement du premier câble de charge et du deuxième câble de charge.

L'invention a également pour objet un procédé de commande de charge réalisé par au moins l'une des unités de commande électronique du système de charge tel que décrit ci-dessus, comprenant les étapes suivantes :
a. On connecte le véhicule donneur,
b. On réalise un ensemble de vérifications et de négociations afin d'assurer la sécurité de l'échange d'énergie, jusqu'à la réalisation d'un test d'isolement du câble de charge,
c. On commande l'interrupteur de précharge de sorte à connecter l'alimentation de précharge au premier connecteur de charge et satisfaire le test d'isolement du câble de charge,
d. On émet un message à destination du véhicule donneur par l'intermédiaire de l'unité de commande électronique du premier connecteur informant le véhicule que le test d'isolement est satisfait,
e. On reçoit la valeur de tension de batterie du véhicule donneur et on commande l'alimentation de précharge de sorte qu'elle délivre une tension égale à la tension de la batterie du véhicule donneur,
f. On reçoit du véhicule donneur un message de validation de la mesure de tension aux bornes du câble de charge, puis, en retour, on émet un message de confirmation à destination du véhicule donneur (Vd),
g. On reçoit alors de l'énergie du véhicule donneur après fermeture d'au moins un relais de recharge du véhicule donneur disposé entre un connecteur de câble de recharge du véhicule donneur et au moins une batterie, éventuellement par l'intermédiaire d'un chargeur embarqué,
h. On connecte le véhicule receveur,
i. On réalise un ensemble de vérifications et de négociations afin d'assurer la sécurité de l'échange d'énergie avec le véhicule receveur,
j. On commande la deuxième pluralité d'interrupteurs, de sorte à connecter le convertisseur de puissance au premier connecteur de charge afin de réaliser un nouveau test d'isolement du câble de charge, et satisfaire le test d'isolement du câble de charge,
k. Lorsque l'on a satisfait test d'isolement du câble de charge, on émet de l'énergie vers le véhicule receveur après fermeture d'au moins un relais de recharge du véhicule receveur disposé entre un connecteur de câble de recharge du véhicule receveur et au moins une batterie, éventuellement par l'intermédiaire d'un chargeur embarqué, l'émission d'énergie étant régulée en commandant le convertisseur de puissance en boucle fermée fonction d'une consigne de courant égale à un consigne de courant reçue du véhicule receveur,
l. Lorsqu'une valeur prédéfinie de l'état de charge du véhicule receveur et/ou du véhicule donneur est atteinte, on commande l'arrêt du transfert d'énergie vers le véhicule receveur puis on commande l'arrêt du transfert d'énergie depuis le véhicule donneur.

### Brève description des dessins

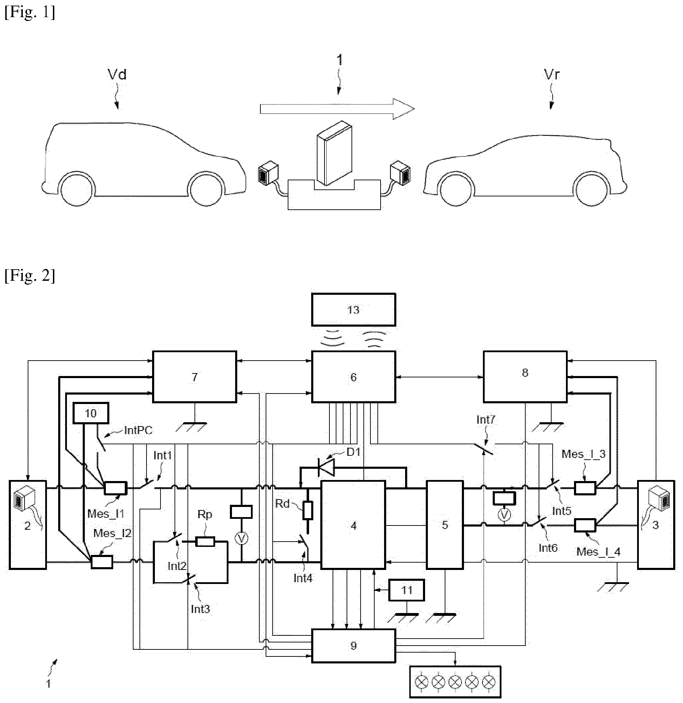

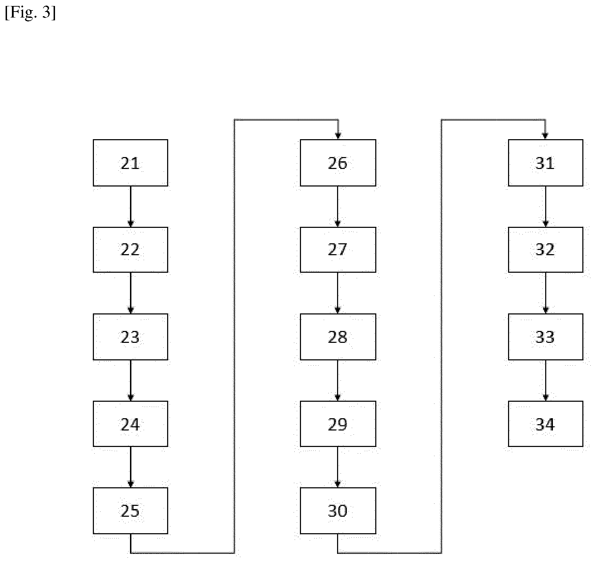

D'autres buts, caractéristiques et avantages de l'invention apparaîtront à la lecture de la description suivante, donnée uniquement à titre d'exemple non limitatif et faite en référence aux dessins annexés sur lesquels :
- la figure [Fig. 1] illustre un système de charge selon l'invention comprenant un dispositif de charge connecté à un véhicule donneur et à un véhicule receveur,
- la figure [Fig.2] illustre les principaux éléments d'un dispositif de charge selon l'invention, et
- la figure [Fig.3] illustre les principales étapes d'un procédé de commande de charge exécuté par les unités de commande électroniques d'un dispositif de charge selon l'invention lors de la charge d'un véhicule receveur à partir d'énergie fournie par un véhicule donneur.

### Description détaillée

La figure [Fig.1] illustre le système de charge comprenant un dispositif de charge 1 connecté par un premier câble de charge à véhicule donneur Vd et par un deuxième câble de charge à véhicule receveur Vr.

Apres des contrôles de sécurité tels que décrits dans les normes IEC 61851-23 et IEC 61851-1, de l'énergie est transférée du véhicule donneur Vd vers le véhicule receveur Vr par l'intermédiaire des câbles de charge et du dispositif de charge 1.

La figure [Fig.2] illustre un dispositif de charge 1 selon l'invention comprenant un premier connecteur 2 pour câble de charge de véhicule automobile destiné à être connecté au premier câble de charge et au véhicule donneur Vd et un deuxième connecteur 3 pour câble de charge de véhicule automobile destiné à être connecté au deuxième câble de charge et au véhicule receveur Vr. Le premier connecteur 2 et le deuxième connecteur 3 sont connectés ensemble par l'intermédiaire d'un convertisseur de puissance 4 et d'un filtre de compatibilité électromagnétique 5.

Plus précisément, le premier connecteur 2 pour câble de charge comprend deux bornes à haute tension par l'intermédiaire desquelles il est connecté au convertisseur de puissance 4.

La première borne est reliée à une première borne d'un premier interrupteur Int1 par l'intermédiaire d'un premier ensemble Mes I_1 de capteurs de courant et de tension. La deuxième borne du premier interrupteur Int1 est connectée à une première entrée E1 du convertisseur de puissance 4.

La deuxième borne est reliée à une première borne d'un circuit de commutation par l'intermédiaire d'un deuxième ensemble Mes_I_2de capteurs de courant et de tension. La deuxième borne du circuit de commutation est connectée à une deuxième entrée E2 du convertisseur de puissance 4.

Le circuit de commutation comprend deux branches en parallèle, une première branche comprenant un deuxième interrupteur Int2 relié en série avec un résistance Rp et une deuxième branche comprenant un troisième interrupteur Int 3.

Un quatrième interrupteur Int 4 est relié en série à une résistance Rd, l'ensemble étant connecté en parallèle des entrées E1,E2 du convertisseur de puissance 4.

Une première sortie S1 du convertisseur de puissance 4 est connectée à une première borne d'un cinquième interrupteur Int5 par l'intermédiaire d'un filtre de compatibilité électronique 5. La deuxième borne du cinquième interrupteur Int5 est connectée à une première borne du deuxième connecteur 3 pour câble de charge par l'intermédiaire d'un troisième ensemble Mes_I_3 de capteurs de courant et de tension.

Une deuxième sortie S2 du convertisseur de puissance 4 est connectée à une première borne d'un sixième interrupteur Int6 par l'intermédiaire du filtre de compatibilité électronique 5. La deuxième borne du cinquième interrupteur Int5 est connectée à une deuxième borne du deuxième connecteur 3 pour câble de charge par l'intermédiaire d'un quatrième ensemble Mes_I_4 de capteurs de courant et de tension.

Une diode D1 est connectée entre la première entrée E1 et la première sortie S1. L'anode de la diode D1 est connectée à la première sortie S1 du convertisseur de puissance 4, la cathode de la diode D1 étant connectée à la première entrée E1 du convertisseur de puissance 4.

Une alimentation de précharge 10 est connectée par un interrupteur de précharge IntPC entre le deuxième moyen de mesure Mes_I_2 et la deuxième borne du premier connecteur 2 pour câble de charge. L'alimentation de précharge 10 délivre notamment une tension ajustable entre 100 Volts et 500 Volts avec un courant maximal de 30 mA.

Le premier ensemble Mes I_1 de capteurs de courant et de tension et le deuxième ensemble Mes_I_2 de capteurs de courant et de tension sont connectés à l'unité de commande électronique 7 du premier connecteur.

Le troisième ensemble Mes_I_3 de capteurs de courant et de tension et le quatrième ensemble Mes_I_4 de capteurs de courant et de tension sont connectés à l'unité de commande électronique 8 du deuxième connecteur.

Le dispositif de charge 1 comprend une unité de commande électronique 6 connectée au convertisseur de puissance 4 ainsi qu'à une unité de commande électronique 7 du premier connecteur et à une unité de commande électronique 8 du deuxième connecteur par un bus de données dédié, de type CAN (acronyme anglophone pour « Common Area Network »).

L'unité de commande électronique 6 est également connecté au premier interrupteur Int1, au deuxième interrupteur Int2, au troisième interrupteur Int3 et au quatrième interrupteur Int4 par des connexions individuelles par l'intermédiaire desquelles l'unité de commande électronique 6 émet un signal de commutation en fonction de la logique de commande décrite plus bas.

L'unité de commande électronique 6 est par ailleurs connectée au cinquième interrupteur Int5 et au sixième interrupteur Int6 par l'intermédiaire d'un septième interrupteur Int7. L'unité de commande électronique 6 émet un signal de commutation à destination de ces interrupteurs, lorsque l'interrupteur Int7 est commandé passant, et ce en fonction de la logique de commande décrite plus bas.

L'unité de commande électronique 6 est connectée à une interface homme machine IHM 13, telle qu'une tablette, un smartphone ou un ordinateur, par une connexion sans fil (bluetooth^{®}, wifi, ...) ou filaire (Connection Série, Ethernet, fibre optique, ...) afin d'échanger des instructions ou informations de fonctionnement.

L'unité de commande électronique 6 est connectée à l'interrupteur de précharge IntPC à destination duquel elle émet un signal de commutation en fonction de la logique de commande décrite plus bas et à l'alimentation de précharge 10 dont elle commande la tension et le courant de sortie.

Le dispositif de charge 1 comprend également une unité de commande électronique 9 de sécurité reliée au convertisseur de puissance 4 par au moins une connexion de données, notamment de type CAN, et par une connexion d'arrêt d'urgence. Un dispositif d'arrêt d'urgence 11, tel qu'un coup de poing, est également connecté au convertisseur de puissance 4 par la connexion d'arrêt d'urgence.

L'unité de commande électronique 9 de sécurité est également connectée à une série d'interrupteurs Int1, Int2, Int3, Int4 et Int7.

L'unité de commande électronique 6 émet un signal de commutation à destination du premier interrupteur Int1, du deuxième interrupteur Int2 et du troisième interrupteur Int3 afin d'autoriser le soutirage de puissance du véhicule donneur Vd dès lors que des contrôles de fonctionnement sont satisfaits. La logique de commande associé à une telle commutation est exposée plus bas.

L'unité de commande électronique 6 émet un signal de commutation à destination du quatrième interrupteur Int4 lorsqu'une décharge active du système est nécessaire. Une telle décharge intervient en fin de charge du véhicule receveur ou suite à une erreur lors du transfert de puissance et consiste à vider les capacités du convertisseur de puissance 4 en moins de 5 secondes afin de respecter les exigences de la norme IEC 61851-23.

L'unité de commande électronique 9 de sécurité est une unité de commande électronique redondante par rapport à l'unité de commande électronique 6, dédiée à la sécurité. L'unité de commande électronique 9 de sécurité vérifie les états des interrupteurs et des courants/ tensions des ensembles de capteurs cités plus haut ainsi que des informations complémentaires comme la température interne du convertisseur DC-DC ou DC-AC. En cas d'erreur déterminée en fonction de ces informations, elle agit en simultané avec l'unité de commande électronique 6 qui fait la même chose de son côté.

L'unité de commande électronique 9 de sécurité émet un signal de commutation à destination du septième interrupteur Int7 afin d'autoriser l'émission de puissance à destination du véhicule receveur Vr dès lors que des contrôles de fonctionnement sont satisfaits. La logique de commande associé à une telle commutation est exposée plus bas. Par défaut, l'interrupteur Int7 est commandé fermé pour autoriser la charge. En cas de défaut, l'interrupteur Int7 est ouvert afin de couper l'alimentation des interrupteurs Int5 et Int 6.

L'unité de commande électronique 9 de sécurité est reliée par une connexion d'arrêt d'urgence à l'unité de commande électronique 7 du premier connecteur et par une autre connexion d'arrêt d'urgence à l'unité de commande électronique 8 du deuxième connecteur, afin de commander l'interruption du fonctionnement de l'une ou l'autre des unités de commande électronique 6,7 en cas d'apparition d'un défaut.

L'unité de commande électronique 9 de sécurité et l'unité de commande électronique 6 sont reliées par une liaison dédiée, notamment asynchrone de type UART (acronyme anglophone pour « Universal Asynchronous Receiver Transmitter ») afin de confirmer leur état de fonctionnement respectif à travers un échange de type cross-talk.

L'unité de commande électronique 9 de sécurité est connectée à une interface homme machine IHM de sécurité 12, notamment une rampe de voyants permettant de communiquer un éventuel état de dysfonctionnement à un opérateur.

L'unité de commande électronique 6 gère les séquences de commutation des différents interrupteurs tout en vérifiant le bon fonctionnement de chaque composant. L'unité de commande électronique 6 supervise également certains aspects de sécurité liés à la relecture de courant et de tension ou la surveillance de la température des composants.

L'unité de commande électronique 9 de sécurité surveille également la relecture de courant et de tension ou la surveillance de la température des composants.

Dès que l'unité de commande électronique 6 ou l'unité de commande électronique 9 de sécurité détecte un défaut, un arrêt d'urgence du dispositif de charge 1 est déclenché.

L'unité de commande électronique 7 du premier connecteur comme l'unité de commande électronique 8 du deuxième connecteur sont conçues pour initier une communication de haut niveau HCL (acronyme anglophone pour « High Level Communication ») avec chaque véhicule connecté par un câble de charge au connecteur correspondant. La communication de haut niveau HCL est similaire à la communication de haut niveau HCL d'un véhicule avec une borne de charge, définie notamment par les normes DIN 70121 ou ISO 15-118.

Durant cette phase de communication de haut niveau HCL, chaque véhicule émet ses paramètres de charge (Tension maximale admissible, Courant maximum admissible, état du véhicule) et le dispositif de charge émet ses propres information à destination de chaque véhicule (statut, tension de fonctionnement minimale et maximale, valeur crête des oscillations de courant maximal « current ripple ») par l'intermédiaire du câble de charge.

Dans un mode de réalisation particulier, une unité de commande électronique du premier connecteur en courant alternatif et/ou une unité de commande du deuxième connecteur en courant alternatif sont prévues afin d'établir et de superviser un transfert de puissance alternative AC avec le véhicule connecté au connecteur de charge que chacune d'entre elles supervise. Dans un tel mode de réalisation, une unité de commande électronique du premier connecteur en courant alternatif est notamment une carte de communication en modulation de largeur d'impulsion PWM (acronyme anglophone pour « Puise Width Modulation ») compatible avec la norme IEC 61851-1 régissant les communications entre une borne de charge et un véhicule. Dans un tel cas, un convertisseur DC-AC ou AC-AC est prévu en parallèle du convertisseur de puissance 4. Alternativement, le convertisseur de puissance 4 est reconfigurable pour passer d'un mode de fonctionnement DC-DC à un mode de fonctionnement DC-AC ou AC-AC.

Dans un mode de réalisation particulier, le dispositif de charge 1 est connecté à un serveur distant pour permettre une remontée des statistiques d'utilisation.

Le procédé de commande à proprement parler va maintenant être exposé.

Au cours d'une première étape 21, l'unité de commande électronique 6 émet un message à l'attention de l'utilisateur par l'intermédiaire de l'interface homme machine 13 indiquant de connecter le véhicule donneur Vd.

Lorsque le véhicule donneur Vd est connecté, le procédé se poursuit par une deuxième étape 22, au cours de laquelle l'unité de commande électronique 6 commande l'unité de commande électronique 7 du premier connecteur d'initier l'échange d'énergie.

Lors d'une troisième étape 23, l'unité de commande électronique 7 du premier connecteur effectue un ensemble de vérifications et de négociations conforme à l'état de l'art antérieur afin d'assurer la sécurité de l'échange d'énergie, jusqu'à la réalisation d'un test d'isolement du câble de charge. Les vérifications et négociations sont notamment celles prévues par les normes DIN SPEC 70121 ou ISO 15118. Il s'agit essentiellement de messages sur les capacités de la borne et du véhicule pour qu'ils s'accordent sur les limites à appliquer durant la session de charge. En déterminant par exemple la tension maximale, le courant maximal, la tension minimale ou le courant minimal. L'unité de commande électronique 7 du premier connecteur en informe alors l'unité de commande électronique 6.

Lors d'une quatrième étape 24, l'unité de commande électronique 6 commande l'interrupteur de précharge IntPC de sorte à connecter l'alimentation de précharge 10 au premier connecteur de charge et satisfaire le test d'isolement du câble de charge. Le test d'isolement du câble de charge consiste en l'application d'une tension au câble de charge et en la vérification de l'isolement du système de charge et du câble de charge.

Lors d'une étape 25, l'unité de commande électronique 7 du premier connecteur informe le véhicule donneur Vd que le test d'isolement est passé. En retour, le véhicule donneur Vd transmet la tension de sa batterie. Le dispositif de charge 1 adapte la tension fournie par l'alimentation de précharge au niveau du premier connecteur au niveau de tension de la batterie du véhicule donneur Vd.

Lors d'une étape 26, l'unité de commande électronique 6 commande alors l'alimentation de précharge 10 de sorte qu'elle délivre une tension égale à la tension de la batterie du véhicule donneur Vd.

Lors d'une étape 27, le véhicule valide la mesure de tension aux bornes du câble de charge, fournie par l'alimentation de précharge 10 et l'unité de commande électronique 7 du premier connecteur émet un message de confirmation à destination du véhicule donneur Vd.

Lors de l'étape 28, le véhicule donneur Vd commande la fermeture d'au moins un de ses relais de recharge conformément au fonctionnement attendu selon l'état de l'art. Le au moins un relais de recharge est disposé entre un connecteur de câble de recharge du véhicule donneur et au moins une batterie, éventuellement par l'intermédiaire d'un chargeur embarqué.

Du fait de l'absence de puissance fournie de la part du dispositif de charge, la puissance s'écoule du véhicule donneur Vd vers le dispositif de charge 1 contrairement au fonctionnement attendu lors d'une charge. Plus précisément, l'unité de commande électronique 6 commande l'interrupteur Int2 pour effectuer la pré-charge et l'interrupteur Int1. L'unité de commande numéro 6 commande ensuite la fermeture de l'interrupteur Int3 et l'ouverture de l'interrupteur Int2.

Au cours d'une étape 29, l'unité de commande électronique 6 émet un message à l'attention de l'utilisateur par l'intermédiaire de l'interface homme machine 13 indiquant de connecteur le véhicule receveur Vr.

Lorsque le véhicule receveur Vr est connecté, le procédé se poursuit par une étape 30, au cours de laquelle l'unité de commande électronique 6 commande l'unité de commande électronique 8 du deuxième connecteur d'initier la charge.

Lors d'une étape 31, l'unité de commande électronique 8 du deuxième connecteur effectue un ensemble de vérifications et de négociations conforme à l'état de l'art antérieur afin d'assurer la sécurité de la charge.

A la différence des étapes 22 à 28, l'ensemble des vérifications sont réalisées conformément à l'attendu, notamment le test d'isolement du câble de charge. En effet, de la puissance étant disponible en entrée E1,E2 du convertisseur de puissance 4, celui-ci se comporte comme une borne de charge.

Lors d'une étape 32, le véhicule receveur Vr commande la fermeture d'au moins un de ses relais de recharge conformément au fonctionnement attendu selon l'état de l'art. Le au moins un relais de recharge est disposé entre un connecteur de câble de recharge du véhicule receveur et au moins une batterie, éventuellement par l'intermédiaire d'un chargeur embarqué.

Lors d'une étape 33, l'unité de commande électronique 6 commande le convertisseur de puissance 4 de sorte à former une boucle de régulation de courant en fonction d'une consigne de courant.

L'unité de commande électronique 6 ajuste la consigne de courant envoyée au convertisseur de puissance 4 en fonction des besoins du véhicule receveur Vr obtenus au travers de la communication avec l'unité de commande électronique 8 du deuxième connecteur, l'unité de commande électronique 8 du deuxième connecteur communiquant elle-même avec le véhicule receveur Vr.

Lorsque l'état de charge du véhicule donneur et/ou du véhicule receveur atteint une valeur prédéterminée, le procédé se poursuit par une étape 34, au cours de laquelle l'unité de commande électronique 6 met fin au transfert d'énergie en interrompant le transfert d'énergie vers le véhicule receveur puis en interrompant le transfert d'énergie depuis le véhicule donneur. L'utilisateur peut ensuite débrancher les deux câbles de charge si l'absence de tension est confirmée.

Plus précisément, l'unité de commande électronique 6 envoie une requête à l'unité de commande électronique 8 du deuxième connecteur de stopper la charge, qui relaie la commande au véhicule receveur Vr. Le véhicule receveur Vr exécute la requête, stoppe sa charge et s'acquitte auprès de l'unité de commande électronique 8 du deuxième connecteur de la requête reçue. Cette information est relue par l'unité de commande électronique 6 qui commande l'ouverture des relais, cinquième interrupteur Int5 et sixième interrupteur Int6. Une fois que les relais sont ouverts, l'unité de commande électronique 6 envoie une requête à l'unité de commande électronique 7 du premier connecteur de stopper la charge côté véhicule donneur Vd. Cette requête est transmise et traitée par le véhicule donneur de façon similaire au traitement de la requête par le véhicule receveur. L'unité de commande électronique 6 commande alors l'ouverture des interrupteurs Int1 et Int3 pour garantir la suppression de la tension. L'unité de commande électronique 6 pilote enfin l'interrupteur Int4 pour décharger le convertisseur de puissance 4.

## Revendications

1. Système de charge d'un véhicule électrique receveur (Vr) par un véhicule électrique donneur (Vd), **caractérisé en ce qu'**il comprend un dispositif de charge (1) connecté au véhicule donneur (Vd) par un premier câble de charge et un premier connecteur (2) pour câble de charge, et au véhicule receveur (Vr) par un deuxième câble de charge et un deuxième connecteur de charge (3) pour câble de charge, le dispositif de charge (1) comprenant le premier connecteur (2) pour câble de charge de véhicule automobile et le deuxième connecteur (3) pour câble de charge de véhicule automobile, un convertisseur de puissance (4) connecté en entrée au premier connecteur (2) et en sortie au deuxième connecteur (3), une unité de commande électronique (6) connectée au convertisseur de puissance (4) ainsi qu'à une unité de commande électronique (7) du premier connecteur et à une unité de commande électronique (8) du deuxième connecteur, le dispositif de charge (1) comprenant une alimentation de précharge (10) connectée par un interrupteur de précharge (IntPC) au premier connecteur (2) pour câble de charge, l'interrupteur de précharge (IntPC) étant connecté à l'unité de commande électronique (6), l'unité de commande électronique (6), l'alimentation de précharge (10) et l'interrupteur de précharge (IntPC) étant configuré de sorte à satisfaire à des contrôles et vérifications préalables à la charge d'un véhicule électrique, le convertisseur de puissance (4) étant commandé pour transférer de l'énergie du véhicule donneur (Vd) vers le véhicule receveur (Vr).

2. Système de charge selon la revendication 1, dans lequel l'alimentation de précharge (10) délivre notamment une tension ajustable, notamment entre 100 Volts et 500 Volts, avec un courant maximal prédéfini, notamment de l'ordre de 30 mA.

3. Système de charge selon la revendication 1 ou 2, dans lequel le dispositif de charge (1) comprend une première pluralité d'interrupteurs (Int1, Int2, Int3) commandant le transfert de puissance entre le premier connecteur (2) et le convertisseur de puissance (4), et une deuxième pluralité d'interrupteurs (Int5, Int6) commandant le transfert de puissance entre le convertisseur de puissance (4) et le deuxième connecteur (3).

4. Système de charge selon l'une quelconque des revendications 1 à 3, dans lequel l'unité de commande électronique (7) du premier connecteur et/ou l'unité de commande électronique (8) du deuxième connecteur sont prévues afin d'établir et de superviser un transfert de puissance alternative AC avec le véhicule connecté au premier connecteur (2) et au deuxième connecteur (3) de charge respectivement, un convertisseur DC-AC ou AC-AC étant prévu en parallèle du convertisseur de puissance (4) avec des interrupteurs disposés de sorte à dérouter le courant de puissance à travers le convertisseur DC-AC ou AC-AC.

5. Système de charge selon l'une quelconque des revendications 1 à 4, dans lequel le dispositif de charge (1) comprend un receveur et un émetteur configurés de sorte à établir une connexion avec un serveur distant ou un dispositif local pour permettre une remontée des statistiques d'utilisation du système de charge.

6. Système de charge selon l'une quelconque des revendications 1 à 5, dans lequel le dispositif de charge (1) comprend une unité de commande électronique (9) de sécurité surveillant au moins une partie des courants et tensions du système de charge, ainsi que le bon fonctionnement de l' unité de commande électronique (6), l' unité de commande électronique (9) de sécurité étant configurée pour interrompre le fonctionnement du dispositif de charge par l'intermédiaire d'un ensemble d'interrupteurs ainsi que de connexions à l'unité de commande électronique (7) du premier connecteur, à l'unité de commande électronique (8) du deuxième connecteur et au convertisseur de puissance (4).

7. Système de charge selon l'une quelconque des revendications 1 à 6, dans lequel l'un au moins parmi le véhicule donneur (Vd) et le véhicule receveur (Vr) est un véhicule hybride.

8. Système de charge selon l'une quelconque des revendications 1 à 6, dans lequel l'alimentation de précharge est connectée par l'intermédiaire de l'interrupteur de précharge au deuxième connecteur pour câble de charge, un relais commandé étant connecté en entrée à l'interrupteur de précharge et en sortie au premier connecteur pour câble de charge et au deuxième connecteur pour câble de charge de sorte à diriger le transfert d'énergie vers l'un ou l'autre des connecteurs pour câble de charge afin de réaliser un test d'isolement du premier câble de charge et du deuxième câble de charge.

9. Procédé de commande de charge réalisé par au moins l'une des unités de commande électronique du système de charge selon l'une quelconque des revendications 1 à 8, comprenant les étapes suivantes :
a. On connecte le véhicule donneur,
b. On réalise un ensemble de vérifications et de négociations afin d'assurer la sécurité de l'échange d'énergie, jusqu'à la réalisation d'un test d'isolement du câble de charge,
c. On commande l'interrupteur de précharge (IntPC) de sorte à connecter l'alimentation de précharge (10) au premier connecteur de charge et satisfaire le test d'isolement du câble de charge,
d. On émet un message à destination du véhicule donneur (Vd) par l'intermédiaire de l'unité de commande électronique (7) du premier connecteur informant le véhicule que le test d'isolement est satisfait,
e. On reçoit la valeur de tension de batterie du véhicule donneur (Vd) et on commande l'alimentation de précharge (10) de sorte qu'elle délivre une tension égale à la tension de la batterie du véhicule donneur (Vd),
f. On reçoit du véhicule donneur (Vd) un message de validation de la mesure de tension aux bornes du câble de charge, puis, en retour, on émet un message de confirmation à destination du véhicule donneur (Vd),
g. On reçoit alors de l'énergie du véhicule donneur (Vd) après fermeture d'au moins un relais de recharge du véhicule donneur disposé entre un connecteur de câble de recharge du véhicule donneur et au moins une batterie, éventuellement par l'intermédiaire d'un chargeur embarqué,
h. On connecte le véhicule receveur,
i. On réalise un ensemble de vérifications et de négociations afin d'assurer la sécurité de l'échange d'énergie avec le véhicule receveur,
j. On commande la deuxième pluralité d'interrupteurs (Int5, Int6), de sorte à connecter le convertisseur de puissance (4) au premier connecteur de charge afin de réaliser un nouveau test d'isolement du câble de charge, et satisfaire le test d'isolement du câble de charge,
k. Lorsque l'on a satisfait test d'isolement du câble de charge, on émet de l'énergie vers le véhicule receveur (Vr) après fermeture d'au moins un relais de recharge du véhicule receveur disposé entre un connecteur de câble de recharge du véhicule receveur et au moins une batterie, éventuellement par l'intermédiaire d'un chargeur embarqué, l'émission d'énergie étant régulée en commandant le convertisseur de puissance (4) en boucle fermée fonction d'une consigne de courant égale à un consigne de courant reçue du véhicule receveur (Vr),
l. Lorsqu'une valeur prédéfinie de l'état de charge du véhicule receveur (Vr) et/ou du véhicule donneur (Vd) est atteinte, on commande l'arrêt du transfert d'énergie vers le véhicule receveur (Vr) puis on commande l'arrêt du transfert d'énergie depuis le véhicule donneur (Vd).
